# EUROPEAN PATENT SPECIFICATION

(11) **EP 3 241 422 B1**
(45) Date of publication and mention of the grant of the patent: **08.07.2020**
(21) Application number: 17169825.1
(22) Date of filing: 05.05.2017
(51) Int. Cl.: A01D 34/81, A01D 34/82

(54) **PROTECTIVE COVER QUICK-CHANGING MECHANISM AND LAWNMOWER WITH SUCH A MECHANISM**
SCHUTZABDECKUNG-SCHNELLWECHSELMECHANISMUS UND RASENMÄHER MIT EINEM SOLCHEN MECHANISMUS
MÉCANISME DE CHANGEMENT RAPIDE DE COUVERCLE DE PROTECTION ET TONDEUSE À GAZON COMPORTANT UN TEL MÉCANISME

(30) Priority: 06.05.2016 CN 201620407500 U
(43) Date of publication of application: 08.11.2017
(73) Proprietor: Zhejiang Yat Electrical Appliance Co., Ltd., Yuxin Town, South Lake Zone Jiaxing Zhejiang 314009 (CN)
(72) Inventor: Pu, Qingwen, Jiaxing City Zhejiang 314009 (CN); Zhu, Zhenjie, Jiaxing City Zhejian 314009 (CN); Ren, Lianying, Jiaxing City Zhejiang 314009 (CN); Wan, Lijun, Jiaxing City Zhejiang 314009 (CN)
(74) Representative: 2s-ip Schramm Schneider Bertagnoll Patent- und Rechtsanwälte Part mbB

(56) References cited:
- EP-A1- 0 714 623
- EP-A1- 1 169 955
- DE-U1- 9 414 011
- US-A- 4 200 978
- US-A- 4 987 681
- US-B1- 6 340 124

## Description

### TECHNICAL FIELD

The disclosure relates to a protective cover quick-changing mechanism and a lawnmower thereof, belonging to the field of garden tools.

### BACKGROUD

Garden tools, such as mowing machines, lawnmowers, etc., are increasingly being used in daily life and work. Because such garden tools are generally provided with cutting tools, and a large number of grass clippings will also be produced during the cutting or mowing process, this type of garden tools are usually installed with protective covers, in order to not only protect the personal safety of users, but also reduce grass splashed on the human body.

However, the protective cover is easily damaged and has a relatively high disassembly frequency since it often encounters some obstacles. Moreover, some users are accustomed to disassembling the protective cover without using such tools so as to facilitate the storage and take up a small space. Because of these conditions, the protective cover needs to be disassembled and assembled frequently.

For mowing machines and lawnmowers in the prior art, many protective covers are integrally molded with the housing, or are fixed on the housing by screws. When assembling or dismantling protective covers, special tools are required for assembly or disassembly. It is very inconvenient to operate. Screw holes are worn seriously after being disassembled/assembled for many times, resulting in poor durability of lawnmowers. US-A-6340124 and DE 94 140 11 U relate to a protective cover, with the features of the pre-characterizing portion of claim 1.

### SUMMARY

The technical problem to be solved by the disclosure is to overcome the shortcomings of the prior art and to provide a protective cover quick-changing mechanism and a lawnmower to facilitate the user to disassemble and assemble the protective cover and improve the convenience.

This object is achieved by the protective cover of claim 1 and the lawnmower of claim 10.

The advantageous effects of using the disclosure are as follows: in the disclosure, a fixing member is provided on the housing. The fixing member is slidable in the housing. The direction of sliding is toward the protective cover or away from the protective cover. The direction of sliding and the socketing direction of the protective cover are intersecting with each other at an angle. In addition, an elastic member is provided between the fixing member and the housing. The elastic force of the elastic member acts on the fixing member to be provided to the fixing member to slide. After being assembled, the fixing member is locked with the protective cover just under the action of the elastic member. Because the locking force depends on the elastic force of the elastic member, that is to say, as long as the elastic force of the elastic member is overcome, the fixing member is disengaged from the protective cover.

In the installation of the disclosure, the protective cover can be installed on the housing in a socketing manner, which is translation socketing with a one-stop process. In the process of socketing, the elastic force of the elastic member is overcome. The manner of directly pressing the fixing member can be used, and the form of indirectly generating a guiding component force on the fixing member in the socketing process of the protective cover can also be used, both of which are available; in the disassembly, it can be achieved in a manner of directly pressing.

Therefore, such disassembly and assembly can be achieved without the help of tools, regardless of directly pressing or indirectly acting. When working in the outdoor, the user can assemble or disassemble the protective cover easily even without a tool. It is very convenient. Moreover, this structure according to the disclosure uses a socketing manner with a one-stop process, and there are no extra steps, saving time and effort. In addition, its own structure is not complicated, there are few parts, and the cost is very low.

Preferably, the fixing member comprises a first fixing body, and the protective cover is provided with a second fixing body which is matched with the first fixing body. The assembly between the housing and the protective cover is converted using the matching of the first fixing body and the second fixing body, and the structure is more compact.

Preferably, the first fixing body comprises a first boss, and the second fixing body comprises a groove or a through hole which is matched with the first boss. The first boss matches with the groove or through hole, which is high in stability and is not easy for the protective cover to be disengaged under normal circumstances.

Preferably, the fixing member further comprises an operation part that drives the first fixing body to move when being stressed and is disengaged from the second fixing body. The first boss and the operation part are provided independently of each other and do not interfere with each other, and the user can realize the linkage of the first fixing body as long as acting on the operation part.

Preferably, the fixing member further comprises a base, the operation part and the first fixing body are located on the same side of the base, and the elastic member is located on the other side of the base, the elastic member is a compression spring; Or, the fixing member further comprises a base, the operation part, the first fixing body, and the elastic member are located on the same side of the base, and the elastic member is a tension spring. The first fixing body and the operation part are provided on the same side, sliding in the same direction is achieved, and it is more convenient to operate. The operation part, the first fixing body, and the elastic member can also be located on the same side of the base, the elastic member is a tension spring, and the tension of the tension spring is used as the acting force for locking the fixing member to the protective cover.

Preferably, the housing is provided with a first through hole corresponding to the position of the first fixing body and a second through hole corresponding to the position of the operation part. After the second through hole is provided, the user can act on the operation part through the second through hole, and it is more convenient to operate.

Preferably, the operation part comprises a second boss, a part of which extends into the second through hole. A part of the second extends into the through hole, which can enhance the positioning effect of the entire fixing member in the housing and have a better sliding stability.

Preferably, the housing is provided with a chute that allows the fixing member to slide and can limit the sliding distance of the fixing member. A chute is provided, which can play a role of limiting the fixing member, preventing the fixing member from going beyond the sliding range, and avoiding the problems such as locking failure due to the fact that the fixing members goes beyond the sliding range.

Preferably, the first fixing body is provided with a guide slope, and when the protective cover is inserted into the housing, the protective cover abuts against the guide slope to push the fixing member to slide by overcoming the applied force of the elastic member. After the guide slope is provided, the fixing member can be erected indirectly by the guiding force of the guide slope without pressing the fixing member during the installation of the protective cover.

According to the invention, a fixing groove is formed in the side surface of the housing concavely, and the protective cover comprises a plugging flange for being plugged into the fixing groove. The plugging flange is fitted to the fixing groove, and the fixing groove can limit the protective cover in the upper and lower direction and reduce the shaking of the protective cover.

Preferably, the first fixing body comprises a first boss that can extend beyond the top wall of the fixing groove, and the plugging flange is provided with a groove or a through hole which is matched with the first boss. The structure design in which first boss is provided in the fixing groove and the groove or the through hole is provided in the plugging flange enables the structure to be more compact without occupying other position space.

Preferably, the plugging flange is provided with lugs at both ends thereof, the fixing groove is provided with limiting jacks at both ends thereof, and the lugs are inserted into the limiting jacks to prevent the two lugs from expanding. In the process of mowing, the protective cover is vulnerable to external forces so as to be deformed, and serious deformation is likely to lead to the fixing member to be disengaged from the protective cover. After the limiting jacks are provided, the limiting jack can achieve positioning the protective cover at both ends so that the degree of deformation is smaller.

Preferably, the side surface of the plugging flange is fitted to the side wall of the fixing groove, and the plugging flange is provided with several avoiding grooves. Several avoiding grooves allow the plugging flange to have a smaller area to be in contact with the side walls of the fixing groove.

In addition, the disclosure further discloses a lawnmower comprising a head, wherein the head comprises the above protective cover quick-changing mechanism.

Other features and advantages of the disclosure will be disclosed in detail in the following detailed description and the accompanying drawings.

### BRIEF DESCRIPTION OF THE DRAWINGS

The disclosure will now be further described with reference to the accompanying drawings:
Fig. 1 is an overall schematic view of Embodiment 1 of a lawnmower according to the disclosure;
Fig. 2 is a exploded schematic view of a protective cover and a housing in Embodiment 1 of a lawnmower according to the disclosure;
Fig. 3 is an exploded schematic view of a fixing member, an elastic member and a housing in Embodiment 1 of a lawnmower according to the disclosure;
Fig. 4 is a cross-sectional schematic view of Embodiment 1 of a lawnmower according to the disclosure;
Fig. 5 is a schematic view showing the structure of a fixing member and an elastic member in Embodiment 1 of a lawnmower according to the disclosure;
Fig. 6 is a schematic view showing the structure of a fixing groove in Embodiment 1 of a lawnmower according to the disclosure;
Fig. 7 is a schematic view showing the structure of the left half housing in Embodiment 1 of a lawnmower according to the disclosure;
Fig. 8 is a schematic view showing the internal structure of a protective cover in Embodiment 1 of a lawnmower according to the disclosure;
Fig. 9 is a schematic view showing the internal structure of a protective cover in Embodiment 2 of a lawnmower according to the disclosure;
Fig. 10 is a schematic view showing the structure of a fixing member in Embodiment 2 of a lawnmower according to the disclosure; and
Fig. 11 is a schematic view showing the connection of a fixing member and a protective cover in Embodiment 3 of a lawnmower, not part of the invention

### DESCRIPTION OF THE EMBODIMENTS

Hereinafter, the technical schemes of the embodiments of the disclosure will be explained and described with reference to the accompanying drawings of the embodiments of the disclosure, but the following embodiments are merely preferred, rather than all, embodiments of the disclosure. Other embodiments obtained by those skilled in the art without making the creative work are all within the scope of protection claimed by the disclosure based on the embodiments in the detailed description.

In the following description, the terms such as "inside", "outside", "up", "down", "left", "right" and the like for indicating the orientation or positional relationship are the orientation or positional relationship shown in the accompanying drawings in order to facilitate the description of the embodiments and the simplified description, rather than to indicate or suggest that the indicated devices or elements must have a particular orientation and be constructed and operated in a particular orientation, so that it is not to be construed as limiting the disclosure.

### Embodiment 1:

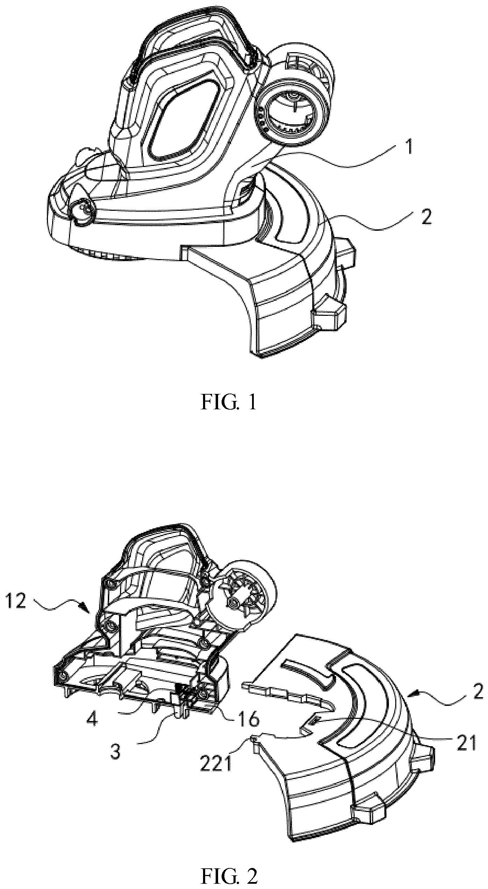

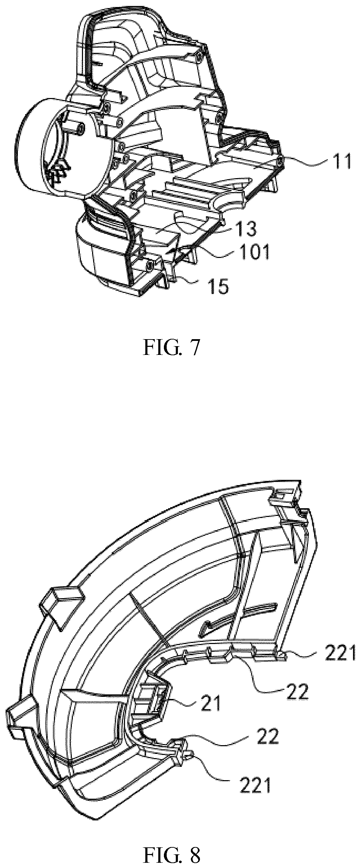

As shown in Figs. 1 to 8, the present embodiment shows a lawnmower. The lawnmower comprises a head and a hand held rod connected to the head. The bottom of the head is provided with a mowing tool or a cutting tool. The head mainly comprises a housing 1 and a protective cover 2 installed on the housing 1. The protective cover is a housing structure fixed to the housing 1 for improving the safety performance of the lawnmower. The connection structure of the housing 1 and the protective cover 2 is shown in Figs. 1 to 8.

In the present embodiment, a fixing member 3 is provided between the housing 1 and the protective cover 2, the fixing member 3 is slidable between the housing 1 and the protective cover 2, and an elastic member 4 is provided between the fixing member 3 and the housing 1. The elastic force of the elastic member 4 acts on the fixing member 3 to be provided to be provided to the fixing member 3 for the upper and lower slides. After being assembled, the fixing member 3 is buckled with the second fixing member 21 on the protective cover 2 under the action of the elastic member 4. The second fixing body 21 in the present embodiment is a through hole, and of course, can also be a groove. After the fixing member 3 is buckled with the second fixing body 21, it indicates that the housing 1 and the protective cover 2 are locked. Because the buckling force depends on the elastic force of the elastic member 4, that is to say, as long as the elastic force of the elastic member 4 is overcome, the fixing member 3 is disengaged from the second fixing body 21.

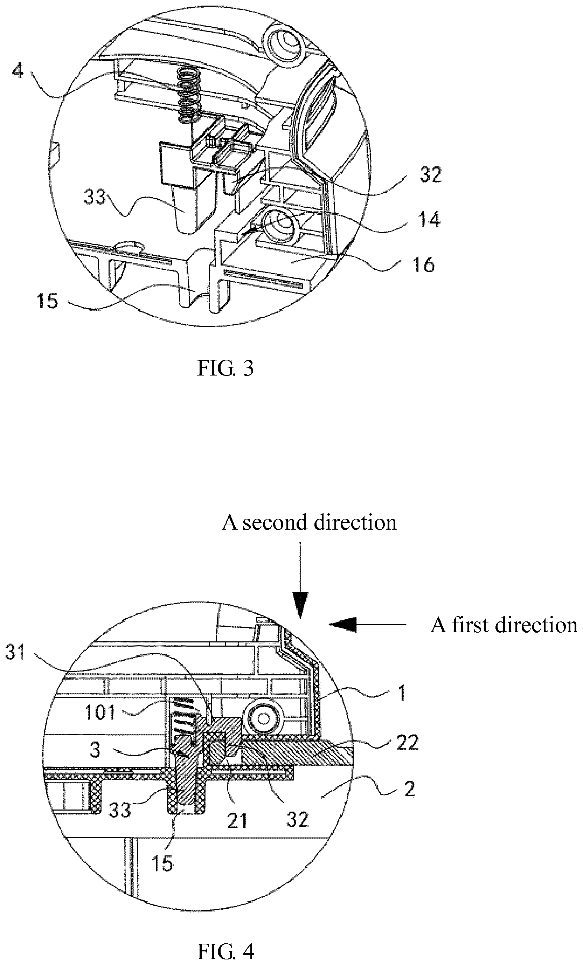

Therefore, in the installation, the protective cover 2 can be installed on the housing 1 in a socketing manner, which is a translation socketing manner with a one-stop process. The direction of socketing is defined as a first direction, the direction of buckling the fixing member 3 and the protective cover 2, that is, the sliding direction of the fixing member 3, is defined as a second direction, and the first direction and the second direction are intersected with each other. In the present embodiment, the first direction and the second direction are preferably perpendicular to each other, as shown in Fig. 4. In other embodiments, of course, the first direction and the second direction are not limited to be perpendicular to each other. In the process of socketing, the elastic force of the elastic member 4 is overcome. The manner of directly pressing the fixing member 3 can be used, and the form of indirectly generating a guiding component force on the fixing member 3 in the socketing process of the protective cover 2 can also be used, both of which are available; in the disassembly, it can be achieved in a manner of directly pressing.

Therefore, such disassembly and assembly can be achieved without the help of tools, regardless of directly pressing or indirectly acting. When working in the outdoor, the user can assemble or disassemble the protective cover easily even without a tool. It is very convenient. Moreover, for this structure according to the disclosure, its own structure is not complicated, there are few parts, and the cost is very low.

### Specific structure:

The fixing member 3 in this embodiment comprises a base 31 on which the first fixing body 32 and the operation part 33 are provided. The first fixing body 32 and the operation part 33 are located on the same side of the base 31 toward the protective cover 2. Specifically, the first fixing body 32 is a first boss protruding from the base 31, and the operation part 33 is a second boss protruding from the base 31. Both the first boss and second boss are located on the same side of the base 31 and face toward the protective cover 2. The first boss can be matched with the second fixing body 21 on the protective cover 2. In the present embodiment, the first fixing body 32, the operation part 33, and the base 31 form an integral structure. It should be noted that the definition of the second fixing body 21 herein is not limited to a groove structure, and a hole structure is available as long as it can be used to prevent the first fixing body 32 from being disengaged in the disassembling and assembling direction of the protective cover 2.

The housing 1 is provided with a first through hole 14 corresponding to the position of the first fixing body 32. The first boss can pass through the first through hole 14 to be buckled with the second fixing body 21 on the protective cover 2. The first boss is provided with a guide slope, and when the protective cover 2 is socketed to the housing 1, the protective cover 2 abuts against the guide slope, so as to generate an upward component force on the first boss to allow the fixing member 3 to overcome the elastic force of the elastic member 4 to slide upward. This is the form of indirectly generating a guiding component force on the fixing member 3 in the socketing process of the protective cover 2; of course, the user can press directly the second boss, and it is also available to directly allowing the second boss to slide upward.

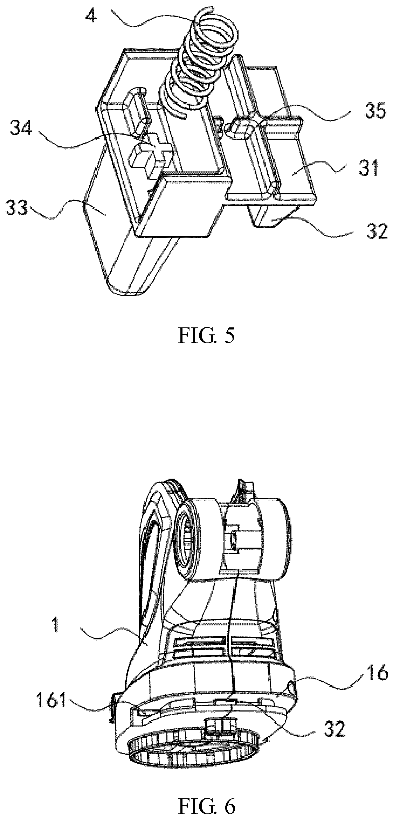

The first fixing body 32 and the operation part 33 are located on the same side of the base 31 and the elastic member 4 is located on the other side of the base 31. In conjunction with the orientation of Figs. 1 to 4, the elastic member 4 is located above the base 31, and the fixing member 32 and the operation part 33 are located below the base 31. The elastic member 4 in the present embodiment is a compression spring. The top surface of the base 31 is provided with a guide rod 34 for positioning the compression spring, and the guide rod 34 may preferably be a cross-shaped column. As shown in Fig. 5 for details, the top surface of the base 31 is further provided with a cross stiffener 35 at a corresponding upper position of the first fixing body 32 to prevent deformation at the base 31 when the first boss is stressed.

It should be noted that the elastic member 4 in the disclosure is not limited to the compression spring in the present embodiment. In other embodiments, the elastic member may be a rubber, a metal shrapnel, and the like. In addition, the elastic member 4 and the fixing member 3 are not limited to the split structure in this embodiment. It is also possible to form an integral structure by secondary injection molding, and it is more convenient to install.

In the present embodiment, the housing 1 is provided with a chute 101. The fixing member 3 is at least partially limited to be movable in the chute 101, and the chute 101 can limit the sliding distance of the fixing member 3. Specifically the housing 1 comprises a left half housing 11 and a right half housing 12. The chute 101 may be formed by splicing the left half housing 11 and the right half housing 12, or may be provided on one of the half housings alone. In the present embodiment, the left half housing 11 is provided with a limiting convex rib 13. The limiting convex rib 13 extends parallel to the right half housing 12. With this design, the right half housing 12 may not be provided with a limiting convex rib 13. A chute 101 is formed between the limiting convex rib 13 and the bottom wall of the housing 1. The base 31 of the fixing member 3 is movable in the chute 101.

In order to facilitate the user to press the operation part 33, the housing 1 is provided with a second through hole 15 corresponding to the position of the operation part 33. In the present embodiment, the second through hole 15 extends downwardly to form a hollow post. The user can manually press the operation part 33 through the second through hole 15 when the pressing is required, and of course, for safety reasons, in order to prevent from being injured by mowing tools, the user may use some small tools to press the operation unit 33 through the second through hole 15.

Preferably, a part of the operation part 33 extends into the second through hole 15. With this design, the second through hole 15 is allowed to have a positioning effect on the operation part 33 so that the fixing member 3 has a better stability during sliding and it is not easy to shake. In the present embodiment, the second boss, as the operation part 33, has a side face with a certain degree of taper so that when the second boss extends into the second through hole 15, an interference squeezing is generated with a better stability.

In addition, in the present embodiment, a fixing groove 16 is formed in the side surface of the housing 1 concavely, so as to stabilize the assembly of the protective cover 2 and the cabinet 1. In the present embodiment, the fixing groove 16 has a U-shaped groove. The protective cover 2 comprises a plugging flange 22 for being plugged into the fixing groove 16. The thickness of the plugging flange 22 is matched with the upper and lower widths of the U-shaped groove. The plugging flange 22 is inserted into the fixing groove 16 in parallel in the installation. After the plugging flange 22 is inserted into the fixing groove 16, it is equivalent to limiting the protective cover 2 in the upper and lower direction. The disassembling and assembling direction of the protective cover 2 is horizontal. When the fixing member 3 is not disengaged from the second fixing body 21, it is difficult for the protective cover 2 to be disengaged from the housing 1.

In the present embodiment, the first fixing body 32 in the fixing member 3 protrudes from the top wall of the fixing groove 16, and the second fixing body 21 is provided on the plugging flange 22. The second fixing body 21 is provided at the vicinity of the middle of the plugging flange 22. The plugging flange 22 is provided with lugs 221 at both ends thereof, the fixing groove 16 is provided with limiting jacks 161 at both ends thereof, and the lugs 221 are inserted into the limiting jacks 161. In the process of mowing, the protective cover 2 is vulnerable to external forces so as to be deformed, and serious deformation is likely to lead to the fixing member 3 to be disengaged from the second fixing body 21. After the limiting jacks 161 are provided, the limiting jack 161 can achieve positioning the protective cover at both ends so that the degree of deformation is smaller.

In the present embodiment, the side surface of the plugging flange 22 is fitted to the side wall of the fixing groove 16. The side surface of the plugging flange 22 is fitted to the side wall of the fixing groove 16, so as to reduce the gap between the protective cover 2 and the housing 1 in the horizontal direction and prevent the lateral displacement between the protective cover 2 and the housing 1. In order to reduce the contact area between the side surface of the plugging flange 22 and the side wall of the fixing groove 16 and improve the fitting effect, the plugging flange 22 is provided with several avoiding grooves 222.

### Embodiment 2

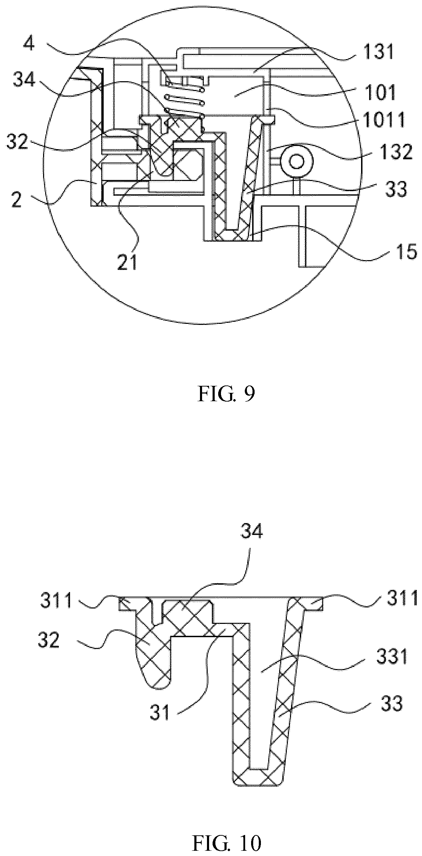

As shown in Figs. 9 to 10, the difference from Embodiment 1 is that the structure of the fixing member 3 in the present embodiment is different. The fixing member 3 in the present embodiment also comprises a base 31, a first fixing body 32, and an operation part 33. In the present embodiment, the guide rod 34 is provided above the first fixing body 32. In addition, in the present embodiment, the operation part 33 is provided with a hollow groove 331 therein. After the hollow groove 331 is provided, there will be an amount of elastic deformation on the side surface of the operation part 33 so that the side surface of the operation part 33 is interference fit with the second through hole 15 when they are closely fit so as to increase the frictional force between the operation part 33 and the second through hole 15 so that it is not easy for the operation part 33 to be disengaged from the second through hole 15 during normal operation of the lawnmower.

It should be noted that the operation part 33 in Embodiment 1 may be also provided with the hollow groove 331, and the guide rod 34 may be provided at the intermediate position of the base 31.

In addition, in the present embodiment, the side wall of the base 31 also extends with a slider 311. The slider 311 comprises a side chute 1011. The side chute 1011 is formed by a gap between an upper limiting convex rib 131 and a lower limiting convex rib 132. The slider 311 realizes limiting slide just in the side chute 1011. In the present embodiment, there are provided two sliders 311, which are located on both sides of the base 311, respectively. With this design, the fixing member 3 has a better stability when sliding.

### Embodiment 3

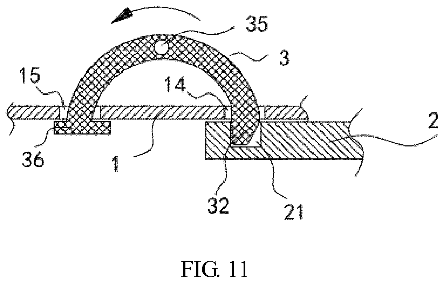

As shown in Fig. 11, the difference from Embodiment 1 is that the fixing member 3 and the elastic member 4 are different in the structure in the present embodiment. The fixing member 3 in the present embodiment is locked by rotation, that is, the fixing member 3 is rotatably connected to the housing 1. The fixing member 3 in the present embodiment comprises a locking end 32 and a pulling end 36. A rotating shaft 35 provided between the locking end 32 and the pulling end 36. The rotating shaft 35 is rotatably connected to the housing 1. The elastic member 4 in the present embodiment is a torsion spring sleeved on the rotating shaft 35. In the example shown in Fig. 11, the direction of the restoring force of the torsion spring is the clockwise direction. The locking end 32 is used to be buckled with the second fixing body 21 on the protective cover 2 as in Embodiment 1. In a free state, the torsion spring provides the applied force to embed the second fixing body 21 in the fixing member 3, and the pulling end 36 extends below the bottom of the housing 1.

In the installation, the protective cover 2 causes the fixing member 3 to rotate in the counterclockwise direction after overcoming the elastic force of the torsion spring by abutting against the guide slope on the locking end 32; in the disassembly, the user pulls the pulling end 36 in the counterclockwise direction, and also overcomes the elastic force of the torsion spring so that the locking end 32 is disengaged from the second fixing body 21. It is convenient to disassemble the protective cover 2 from the housing 1 at this time.

### Embodiment 4

The difference from Embodiment 1 is that in the present embodiment, the elastic member may be provided on the same side as the first fixing body and the operation part, that is, the elastic member, the first fixing body, and the operation part all face toward the protective cover. In the present embodiment, the elastic member is a tension spring, one end of which is connected to the bottom wall of the housing and the other end is connected to the base or connected to the operation part. The tension spring can produce a downward force on the fixing member. The force allows the first fixing body to be locked with the second fixing body on the protective cover.

### Embodiment 5

The difference from Embodiment 1 is that in the present embodiment, the protective cover may not be provided with a groove or a through hole. The elastic force of the elastic member is sufficiently large to cause a sufficient frictional force between the first fixing body and the protective cover in order to prevent the protective cover from being disengaged. This embodiment achieves locking with the friction force. Of course, it is also possible to provide a friction plate or the like on the protective cover to improve the frictional force between the first fixing body and the protective cover.

## Claims

1. A protective cover quick-changing mechanism, comprising a housing (1), on which a protective cover (2) is fixed, the protective cover (2) being socketed on the housing (1), a fixing member (3) for locking the protective cover (2) to the housing (1) is slidably connected on the housing (1), and an elastic member (4) for enabling the fixing member to lock the protective cover (2) to the housing (1) is provided between the housing (1) and the fixing member (3) **characterized in that**
a fixing groove (16) is formed in the side surface of the housing (1) concavely, and the protective cover (2) comprises a plugging flange (22) for being plugged into the fixing groove (16),
the direction of sliding of the fixing member (3) and the socketing direction of the protective cover (2) being intersecting with each other at a predetermined angle.

2. The protective cover quick-changing mechanism according to claim 1, **characterized in that** the fixing member (3) comprises a first fixing body (32), and the protective cover(2) is provided with a second fixing body (21) which is matched with the first fixing body (32).

3. The protective cover quick-changing mechanism according to claim 2, **characterized in that** the first fixing body (32) comprises a first boss, and the second fixing body (21) comprises a groove or a through hole which is matched with the first boss.

4. The protective cover quick-changing mechanism according to claim 3, **characterized in that** the fixing member (3) further comprises an operation part that drives the first fixing body to move when being stressed and is disengaged from the second fixing body (21).

5. The protective cover quick-changing mechanism of claim 4, **characterized in that** the fixing member (3) further comprises a base (31), the operation part and the first fixing body (32) are located on the same side of the base (31), and the elastic member (4) is located on the other side of the base (31), the elastic member (4) is a compression spring, or **in that** the fixing member further comprises a base (31), the operation part, the first fixing body (32), and the elastic member (4) are located on the same side of the base (31), and the elastic member (4) is a tension spring.

6. The protective cover quick-changing mechanism according to claim 4, **characterized in that** the housing (1) is provided with a first through hole (14) corresponding to the position of the first fixing body (32) and a second through hole (15) corresponding to the position of the operation part.

7. The protective cover quick-changing mechanism according to claim 6, **characterized in that** the operation part comprises a second boss, a part of which extends into the second through hole (15).

8. The protective cover quick-changing mechanism according to claim 1, **characterized in that** the first fixing body (32) comprises a first boss that can extend beyond the top wall of the fixing groove (16), and the plugging flange (22) is provided with a groove or a through hole which is matched with the first boss.

9. The protective cover quick-changing mechanism according to claim 1, **characterized in that** the plugging flange (22) is provided with lugs at both ends thereof, the fixing groove (16) is provided with limiting jacks at both ends thereof, and the lugs are inserted into the limiting jacks to prevent the two lugs from expanding.

10. A lawnmower comprising a head, **characterized in that** the head comprises the protective cover quick-changing mechanism according to any one of the preceding claims.

## Patentansprüche

1. Schutzhüllen-Schnellwechselmechanismus, der ein Gehäuse (1) umfasst, an dem eine Schutzhülle (2) befestigt ist, wobei die Schutzhülle (2) auf das Gehäuse (1) aufgesteckt ist; wobei ein Fixierelement (3) zum Verriegeln der Schutzhülle (2) mit dem Gehäuse (1) verschiebbar am Gehäuse (1) verbunden ist und ein elastisches Element (4), das es dem Fixierelement ermöglicht, die Schutzhülle (2) mit dem Gehäuse (1) zu verriegeln, zwischen dem Gehäuse (1) und dem Fixierelement (3) vorgesehen ist, **dadurch gekennzeichnet, dass** in der Seitenfläche des Gehäuses (1) eine Befestigungsnut (16) konkav ausgebildet ist, und wobei die Schutzhülle (2) einen Steckflansch (22) zum Einstecken in die Befestigungsnut (16) umfasst, wobei die Gleitrichtung des Fixierelementes (3) und die Steckrichtung der Schutzhülle (2) sich in einem vorgegebenen Winkel schneiden.

2. Schutzhüllen-Schnellwechselmechanismus nach Anspruch 1, **dadurch gekennzeichnet, dass** das Fixierelement (3) einen ersten Fixierkörper (32) umfasst und die Schutzhülle (2) mit einem zweiten Fixierkörper (21) versehen ist, der zum ersten Fixierkörper (32) passt.

3. Schutzhüllen-Schnellwechselmechanismus nach Anspruch 2, **dadurch gekennzeichnet, dass** der erste Fixierkörper (32) einen ersten Rundvorsprung und der zweite Fixierkörper (21) eine Nut oder eine Durchgangsbohrung umfasst, die zum ersten Rundvorsprung passt.

4. Schutzhüllen-Schnellwechselmechanismus nach Anspruch 3, **dadurch gekennzeichnet, dass** das Fixierelement (3) ferner ein Bedienteil umfasst, das den ersten Fixierkörper antreibt, sich zu bewegen, wenn er belastet wird, und von dem zweiten Fixierkörper (21) gelöst ist.

5. Schutzhüllen-Schnellwechselmechanismus nach Anspruch 4, **dadurch gekennzeichnet, dass** das Fixierelement (3) ferner eine Basis (31) umfasst, dass der Bedienteil und der erste Fixierkörper (32) auf derselben Seite der Basis (31) liegen, und dass das elastische Element (4) auf der anderen Seite der Basis (31) liegt, wobei das elastische Element (4) eine Druckfeder ist, oder **dadurch gekennzeichnet ist, dass** das Fixierelement ferner eine Basis (31) umfasst, das Bedienteil, der erste Fixierkörper (32) und das elastische Element (4) auf der gleichen Seite der Basis (31) liegen, und das elastische Element (4) eine Zugfeder ist.

6. Schutzhüllen-Schnellwechselmechanismus nach Anspruch 4, **dadurch gekennzeichnet, dass** das Gehäuse (1) mit einer ersten Durchgangsbohrung (14) entsprechend der Position des ersten Fixierkörpers (32) und einer zweiten Durchgangsbohrung (15) entsprechend der Position des Bedienteils versehen ist.

7. Schutzhüllen-Schnellwechselmechanismus nach Anspruch 6, **dadurch gekennzeichnet, dass** der Bedienteil einen zweiten Rundvorsprung umfasst, ein Teil dessen sich in das zweite Durchgangsloch (15) erstreckt.

8. Schutzhüllen-Schnellwechselmechanismus nach Anspruch 1, **dadurch gekennzeichnet, dass** der erste Fixierkörper (32) einen ersten Rundvorsprung umfasst, der sich über die obere Wand der Befestigungsnut (16) hinaus erstrecken kann, und wobei der Steckflansch (22) mit einer Nut oder einer Durchgangsbohrung versehen ist, die zum ersten Rundvorsprung passt.

9. Schutzhüllen-Schnellwechselmechanismus nach Anspruch 1, **dadurch gekennzeichnet, dass** der Steckflansch (22) an seinen beiden Enden mit Laschen versehen ist, die Befestigungsnut (16) an ihren beiden Enden mit Begrenzungsbuchsen versehen ist, und die Laschen in die Begrenzungsbuchsen eingesetzt sind, um ein Ausdehnen der beiden Laschen zu verhindern.

10. Rasenmäher umfassend einen Kopf, **dadurch gekennzeichnet, dass** der Kopf den Schutzhüllen-Schnellwechselmechanismus nach einem der vorhergehenden Ansprüche umfasst.

## Revendications

1. Mécanisme de changement rapide de couvercle de protection, comprenant un boîtier (1) sur lequel un couvercle de protection (2) est fixé, le couvercle de protection (2) étant assemblé sur le boîtier (1), un élément de fixation (3) destiné à verrouiller le couvercle de protection (2) sur le boîtier (1) étant relié de manière coulissante sur le boîtier (1), et un élément élastique (4) permettant à l'élément de fixation de verrouiller le couvercle de protection (2) sur le boîtier (1) étant prévu entre le boîtier (1) et l'élément de fixation (3), **caractérisé en ce qu'**une rainure de fixation (16) est formée de manière concave dans la surface latérale du boîtier (1), et le couvercle de protection (2) comprend une bride d'obturation (22) destinée à être enfichée dans la rainure de fixation (16), la direction de coulissement de l'élément de fixation (3) et la direction d'assemblage du couvercle de protection (2) s'entrecroisant selon un angle prédéterminé.

2. Mécanisme de changement rapide de couvercle de protection selon la revendication 1, **caractérisé en ce que** l'élément de fixation (3) comprend un premier corps de fixation (32), et le couvercle de protection (2) est pourvu d'un second corps de fixation (21) qui correspond au premier corps de fixation (32).

3. Mécanisme de changement rapide de couvercle de protection selon la revendication 2, **caractérisé en ce que** le premier corps de fixation (32) comprend un premier bossage, et le second corps de fixation (21) comprend une rainure ou un trou traversant qui correspond au premier bossage.

4. Mécanisme de changement rapide de couvercle de protection selon la revendication 3, **caractérisé en ce que** l'élément de fixation (3) comprend en outre une pièce d'actionnement qui force le premier corps de fixation à se déplacer lorsqu'il est sollicité, et se dégage du second corps de fixation (21).

5. Mécanisme de changement rapide de couvercle de protection selon la revendication 4, **caractérisé en ce que** l'élément de fixation (3) comprend en outre une base (31), la partie d'actionnement et le premier corps de fixation (32) sont situés du même côté de la base (31), et l'élément élastique (4) est situé de l'autre côté de la base (31), l'élément élastique (4) étant un ressort de compression, ou **en ce que** l'élément de fixation comprend en outre une base (31), la partie d'actionnement, le premier corps de fixation (32) et l'élément élastique (4) étant situés du même côté de la base (31), et l'élément élastique (4) étant un ressort de traction.

6. Mécanisme de changement rapide de couvercle de protection selon la revendication 4, **caractérisé en ce que** le boîtier (1) est pourvu d'un premier trou traversant (14) correspondant à la position du premier corps de fixation (32) et d'un second trou traversant (15) correspondant à la position de la partie d'actionnement.

7. Mécanisme de changement rapide de couvercle de protection selon la revendication 6, **caractérisé en ce que** la partie d'actionnement comprend un second bossage, dont une partie s'étend dans le second trou traversant (15).

8. Mécanisme de changement rapide de couvercle de protection selon la revendication 1, **caractérisé en ce que** le premier corps de fixation (32) comprend un premier bossage pouvant s'étendre au-delà de la paroi supérieure de la rainure de fixation (16), et la bride d'obturation (22) est pourvue d'une rainure ou d'un trou traversant qui correspond au premier bossage.

9. Mécanisme de changement rapide de couvercle de protection selon la revendication 1, **caractérisé en ce que** la bride d'obturation (22) est pourvue de pattes à ses deux extrémités, la rainure de fixation (16) est pourvue de vérins de limitation à ses deux extrémités, et **en ce que** les pattes sont insérées dans les vérins de limitation pour empêcher les deux pattes de s'étendre.

10. Tondeuse à gazon comprenant une tête, **caractérisée en ce que** la tête comprend le mécanisme de changement rapide de couvercle de protection selon l'une quelconque des revendications précédentes.
